# EUROPEAN PATENT SPECIFICATION

(11) **EP 1 433 921 B1**
(45) Date of publication and mention of the grant of the patent: **09.05.2007**
(21) Application number: 03029429.2
(22) Date of filing: 19.12.2003
(51) Int. Cl.: E06B 9/88, E06B 9/90

(54) **Shutter mechanism including stepping motor**
Laden mit Schrittmotor
Volet avec moteur pas à pas

(30) Priority: 25.12.2002 JP 2002373953
(43) Date of publication of application: 30.06.2004
(73) Proprietor: MINEBEA Co., Ltd., Kitasaku-gun, Nagano-Ken 389-0293 (JP)
(72) Inventor: Akiwa, Naotaka, Minebea Co., Ltd., Kitasaku-gun Nagano-ken 389-0293 (JP)
(74) Representative: Konle, Tilmar

(56) References cited:
- WO-A-02/06622
- JP-A- 2000 060 185

## Description

The present invention relates to shutter mechanisms for shutters, elevators, or the like, and in particular to improvement of the stopping control at the upper and lower limit positions of an object to be wound and unwound by using the detected magnitude of a load generated at a motor used to wind and unwind the object.

Document WO-A-02/06622 describes a shutter mechanism and particularly a stepping motor control apparatus used for controlling a stepping motor requiring bi-directional control of first and second stopping positions. The shutter mechanism is capable of winding up and down a shutter comprising a mechanism part having a shutter body, a drum and a drive part having the stepping motor. The rotation of the stepping motor is transmitted to the drum. A power detection part is provided for detecting a current supplied by a power supply part. A control part is provided having a storage part for storing the number of driving pulses to the stepping motor between a wind up limit and a wind down limit when the stepping motor is stopped after rotating by a specified angle in one direction under the control of the control part. The magnitude of the load at the stepping motor is detected based on an increase of the motor current by the power detection part. When the power detection part detects a current larger than a set current and judges that the winding up limit or winding down limit has been reached, the rotation of the stepping motor is stopped. Thereafter, the stepping motor is rotated by a specified angle in the direction opposite to the rotating direction of the motor.

However, in the known shutter mechanism according to document WO-A-02/06622 the value of the drive current to the stepping motor varies causing the motor rotor to continue rotating briefly due to inertia even after the controller stops the current to the motor. As a result, there is a time lag until the motor stops completely, reducing the precision of the position wherein the shutter main unit comes to rest.

In addition, the known shutter mechanism includes sensors for sensing the upper limit position for winding the shutter main unit and the lower limit position for unwinding the shutter main unit. These sensors require additional parts and space to place the sensors in the location wherein the shutter mechanism will be used.

A brake mechanism can be provided on the drum, and a speed reduction mechanism may be connected to the drum through a clutch, in order to increase the accuracy of the position where the shutter main unit comes to rest. However, such a brake mechanism would require an even higher number of parts, and would further increase the cost of manufacturing and assembly of the shutter mechanism.

### SUMMARY OF THE INVENTION

In view of the above, it is an object of the present invention to provide a shutter mechanism that is capable of improving the accuracy of the position at which an object to be selectively wound and unwound (hereinafter object) stops, without increasing the number of parts or adding cost to the manufacture of the mechanism.

It is a further object of the present invention to provide a shutter mechanism wherein the upper and lower limit positions of the object to be wound and unwound can be easily set.

It is yet another object of the present invention to provide a stepping motor control apparatus with upper and lower limit stopping position control for a shutter mechanism including an object to be wound and unwound.

The shutter mechanism of the present invention is equipped with a drum including an object to be selectively wound and unwound, a stepping motor for rotating the drum, a driver for supplying a drive current to the stepping motor, a controller for supplying command pulses to the driver, a memory for storing control data for the controller, and a load magnitude detection circuit that detects the magnitude of a load on the stepping motor.

Because the shutter mechanism of the present invention includes a stepping motor as the motive source for the drum, it possible to control the speed and to immediately stop the stepping motor as soon as the controller issues the stop command. Consequently, it is possible to increase the stopping precision of the shutter mechanism without increasing the number of parts. In addition, because the load magnitude detection circuit detects the magnitude of the load on the stepping motor, the detection results thereof can be used to set the upper and lower limit positions for the object, and can be used to provide, for example, an emergency stop feature.

The structure of the shutter mechanism of the present invention is such that the load generated at the stepping motor increases when the object arrives at the upper limit position when wound, or at the lower level position when unwound, making it possible for the load magnitude detection circuit to detect that the object has arrived at the upper level position or at the lower level position by detecting the increase in the load.

Furthermore, the memory stores the number of command pulses to be output from the controller in order to move the object between the upper limit position and the lower limit position. This makes it possible for the controller to read out the number of command pulses stored by the memory, and to control the number of command pulses output to the driver. For example, even if the object is halted temporarily between the upper limit position and the lower limit position, it is still possible to stop the object at the upper limit position or at the lower limit position after restarting movement of the object.

The controller can set the number of command pulses stored in the memory and stop the output of the command pulses to the driver when the load magnitude detection circuit detects an increase in the magnitude of the load at the stepping motor. The controller can then subsequently restart the output of the command pulses to the driver, and cause the memory to store the number of output command pulses output up to the point that the load magnitude detection circuit detects an increase in the magnitude of the load at the stepping motor, after the output of the command pulses has been restarted. With this type of situation, the object is, for example, first wound to the upper limit position and then unwound to the lower limit position, and the number of pulses output by the controller in order to move the object from the upper limit position to the lower limit position is stored in the memory. As a result, it is possible to detect the arrival of the object at the upper or lower limit position by counting the number of corresponding command pulses output by the controller.

The memory may be a nonvolatile memory that stores the number of command pulses, making it possible for the controller to compare the number of command pulses output to the driver with the number of command pulses read out from the non-volatile memory. Consequently, it is possible to accurately stop the object at the upper limit position or the lower limit position. The non-volatile memory may be a non-volatile RAM, EPROM, one or more floppy disks, one or more hard disks, one or more magneto-optical disks, or other memory media capable of retaining stored data when the power is turned off. Using the configuration described above, it is possible to automatically set the upper limit position and the lower limit position of the object.

The controller may also be capable of stopping or reversing the motion of the object when the object moves between the upper limit position and the lower limit position and the magnitude of the load detected by the load magnitude detection circuit exceeds a preset value. For example, if there is an obstruction in the movement path of the object as the object is being unwound, the magnitude of the load will increase when the object strikes the obstruction. The controller then can either stop or reverse the direction of the object, thus preventing damage to the obstruction, the object and components of the shutter mechanism.

The driver used in the shutter mechanism of the present invention may be a chopper-type current source driver that outputs a chopper signal that chops out the square wave that is output by the driver. The chopper-type current source driver maintains the current to the stepping motor at a steady value using the chopper signal. In other words, the chopper signal will prevent an increase in the current that would otherwise occur when the magnitude of the load on the stepping motor increases. This type of chopper signal causes the square waves generated by the chopper-type current source driver to be chopped into a comb-tooth pattern. Consequently, the frequency of the output of the chopper signal increases in proportion to the magnitude of the load.

The load magnitude detection circuit is equipped with a waveform detector that detects and outputs the chopper signal, where the magnitude of the load is detected based on the waveform output from the waveform detector. The load magnitude detection circuit can be equipped with a filter that converts the waveform output from the waveform detector into a series of continuous pulses, making it possible for the magnitude of the load to be detected based on the width of the pulses output from the filter. Conversely, the load magnitude detection circuit can be equipped with a filter that converts the waveform signal output from the waveform detector into a voltage signal, making it possible to detect the magnitude of the load based on the voltage signal output from the filter.

The filter can be equipped with a capacitor having a capacitance that can be set in accordance with the desired shape of the pulses. For example, if the capacitance of the capacitor is relatively small, then the comb-tooth pattern of the chopper waveform can be made into a continuous series of pulses. Consequently, the controller is able to detect the magnitude of the load on the stepper motor based on the width of the pulses output from the filter.

Furthermore, if the capacitance is large, then the pulses, as described above, will be contiguous with one another, making it possible to produce a smooth waveform. Given this, if the filter is equipped with, for example, a comparator, the comparator can generate and output a signal to the controller if the voltage of the flat waveform exceeds a predetermined voltage that is set in the comparator or stored in the memory.

The waveform detector can be equipped between the coil and the power supply of the stepping motor, making it possible to detect the chopper signal. When the chopper signal and the square waves chopped into a comb-toothed pattern are output, the voltage of the drive current momentarily falls with the timing with which the chopper signal is output. The chopper signal can be detected as the collector current in an amplifier when the drop in the voltage is input as the base voltage of the amplifier. The waveform of this collective current is a comb-tooth pattern chopper waveform.

### BRIEF DESCRIPTION OF THE DRAWINGS

The accompanying figures, where like reference numerals refer to identical or functionally similar elements throughout the separate views and which together with the detailed description below, are incorporated in and form part of the specification, serve to further illustrate various embodiments and to explain various principles and advantages all in accordance with the present invention.

FIG. 1 is a front elevation view of a shutter mechanism according to the present invention.

FIG. 2 is a block schematic diagram of the stepping motor control apparatus included in the shutter mechanism of FIG. 1.

FIG. 3 is a circuit diagram of certain components of the stepping motor control apparatus of FIG. 2.

FIG. 4A shows an exemplary comb-tooth pattern collector current waveform at point A in FIG. 3.

FIGs. 4B and 4C respectively show exemplary pulse waveforms and voltage levels at point B in FIG. 3.

FIG. 5A is a graph of current versus time for the waveform of the drive current supplied from the power supply shown in FIG. 3.

FIG. 5B is a graph of voltage versus time for the waveform of a chopper signal output from the current driver shown in FIG. 3.

FIG. 5C is a graph of voltage versus time for the waveform of the square wave that is output from an amplifier of the current driver shown in FIG. 3 in response to the chopper signal shown in FIG. 5B being output from a control part of the current driver.

FIG. 5D is a graph of current versus time for the drive current in response to the square wave as shown in FIG. 5C being output from the amplifier of the current driver in FIG. 3.

### DETAILED DESCRIPTION

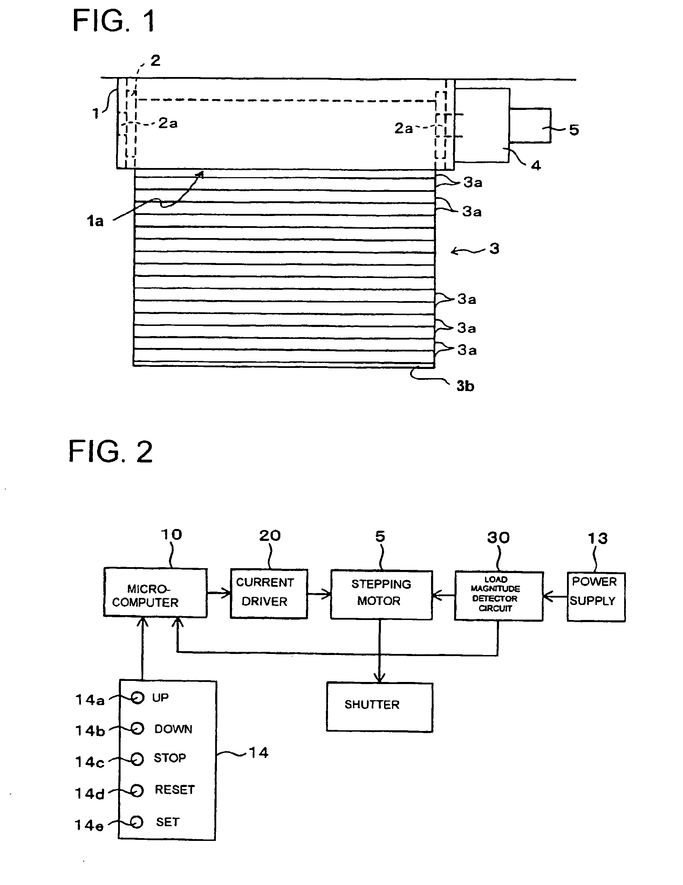

Referring now to the drawings in which like numbers reference like parts, a shutter mechanism according to a preferred exemplary embodiment of the present invention will be discussed. FIG. 1 shows a shutter mechanism equipped at the top part of an entrance/exit for a factory or the like. A housing 1 houses a drum 2 in such a way that the drum 2 can rotate. A shutter 3, or, more generally, an object to be selectively wound onto and unwound from the drum 2 (an object), includes multiple hinged plates 3a and is attached at one end thereof to the drum 2 such that the shutter 3 is capable of being wound onto, and unwound from, the drum 2. An end of the shutter 3 opposite the end that is attached to the drum 2 hangs in a downward direction from an opening 1a in the housing 1. The drum 2 includes axles 2a at both ends thereof that are supported at respective ends of the housing 1 in such a way that they can rotate freely. The axle 2a on the right side of the drum 2 in FIG. 1 is connected to an output axle of a stepping motor 5 through a speed reducer 4 equipped at a right side of the housing 1.

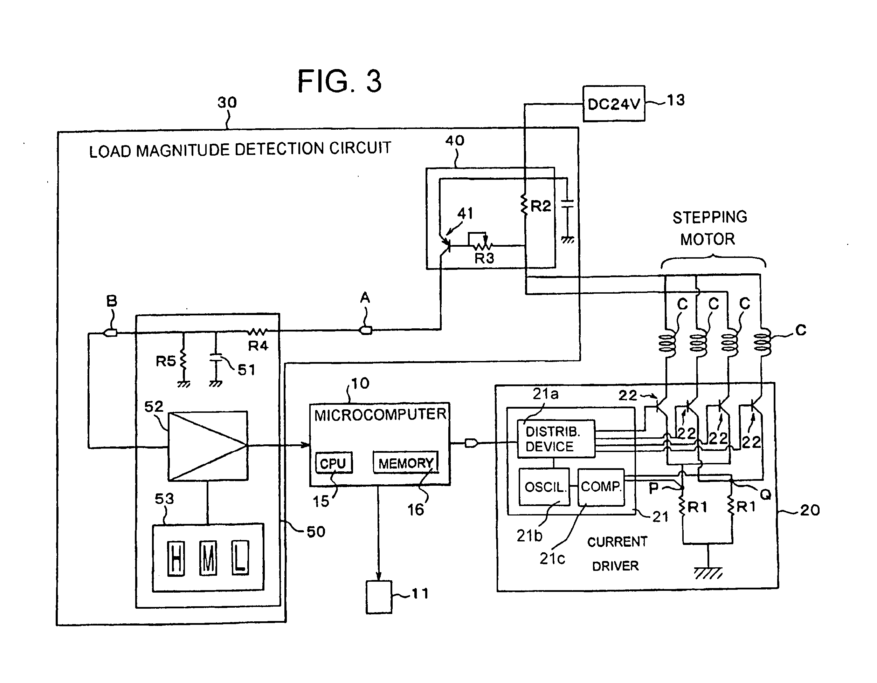

Referring now to FIGs. 2 and 3, a stepping motor control apparatus of the shutter mechanism is shown. The stepping motor control apparatus includes a microcomputer 10 with a CPU 15, a memory 16, and other well known components such as, for example, an A/D converter, a D/A converter and an I/O interface, all of which are not shown for ease of illustration purposes. The microcomputer 10 outputs command pulses to a chopper-type current source driver (hereinafter current driver) 20, and the current driver 20 provides a specific DC current from the power supply 13 to the coils C of the stepping motor 5 with a timing based on command pulses, the details of which will be discussed below in more detail.

As is shown in FIG. 3, the current driver 20 is equipped with a control part 21, and an amplifier 22 formed from, for example, field effect transistors (FETS). The control part 21 includes components such as a distributor device 21a, an oscillator 21b and a comparator 21c. The distributor device 21a may be, for example, a bistable, flip flop, integrated circuit or the like that distributes a square waveform, also referred to as a pulsed or chopper signal, to control the application of bias current to the elements of the amplifier 22 based on control signals, or pulsed signals, from the microcomputer 10. The bias current causes an emitter current to flow from the power supply 13 to the amplifier 22, forming the drive current supplied to the coils C. The comparator 21c monitors the voltage at terminals P and Q of the resistor R1 equipped between ground and the collectors of the FETS of the amplifier 22, and outputs a logical signal to the oscillator 21b upon detecting that the voltage across terminals P and Q has increased by a predetermined amount. This predetermined amount of increase indicates that the value of the drive current has increased, which in turns indicates that the magnitude of the load on the stepping motor 5 has increased. Upon receiving the logical signal from the comparator 21c, the oscillator 21b outputs a square wave, or pulsed, signal to the distributor 21a at a frequency of between approximately 10 KHz and 40 KHz to chop the control signals from the microcomputer 10. By outputting a resulting chopper signal, the control part 21 can maintain the drive current of the motor 5 at a constant level.

Still referring to FIG. 3, the load magnitude detection circuit 30 is connected between the power supply 13 and the coils C of the stepping motor 5 and includes both a waveform detector 40 and a waveform generator circuit 50. A load resistor R2 within the waveform detector 40 is connected in series between the power supply 13 and the coils C, and an amplifier 41 is equipped in parallel between the two terminals of the load resistor R2 through a variable resistor R3. When the current driver 20 outputs the chopper signal so that the supplied drive current falls at that instant and the base voltage on the amplifier 41 drops as a result, the amplifier 41 outputs a collector current to the waveform generator circuit 50.

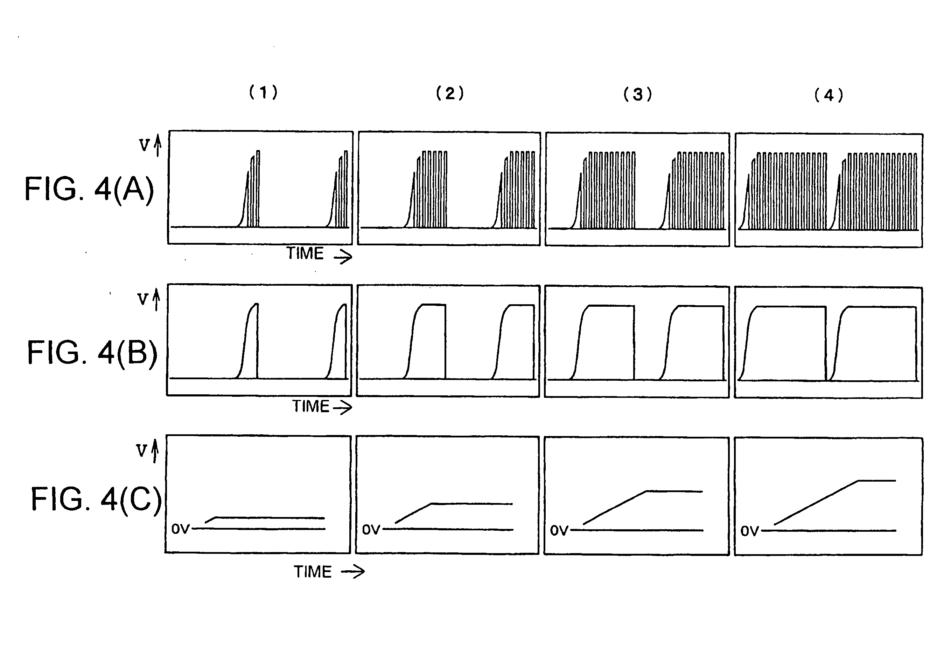

The waveform generator circuit 50 includes a capacitor 51 and a comparator 52, along with resistors R4 and R5. The capacitor 51 and resistors R4, R5 effectively form a filter that causes the comb-tooth pattern collector current waveform (chopper waveform) output from the waveform detector as shown in FIG. 4A to form a pulsed signal from a continuous series of pulses as shown in FIG. 4B. This pulsed signal is input into the microcomputer 10, where the microcomputer 10 infers the magnitude of the load on the stepping motor 5 based on the width, or in other words, the time duration, of the pulse signal.

If the capacitance of the capacitor 51 is large, then the pulses will be contiguous with each other, forming flat waveforms of different voltages, as shown in FIG. 4C. When the pulses form flat waveforms, the flat waveforms are input into the comparator 52. If the voltage thereof is greater than a predetermined voltage set for the comparator 52, the comparator 52 outputs a signal to the microcomputer 10. The microcomputer 10 infers whether or not the magnitude of the load on the stepping motor 5 is in excess of a specific predetermined value based on the presence or absence of a signal output by the comparator 52. Note that the comparator 52 is not enabled when the pulsed signal is as shown in FIG. 4B.

FIG. 3 also shows selector switches 53 for setting the predetermined voltage for the comparator 52, where the selector switches correspond to three different voltage levels: HIGH (H); MID (M); and LOW (L). Also, an LED 11 may be included to be illuminated when the microcomputer 10 determines that the magnitude of the load on the stepping motor 5 is in excess of a specific predetermined value.

Referring again to FIG. 2, an exemplary switchboard 14 is shown as being connected to the microcomputer 10. The switchboard 14 is equipped with UP, DOWN and STOP switches 14a, 14b, and 14c for raising, lowering, and stopping the shutter 3. The switchboard 14 is also equipped with RESET and SET switches 14d and 14e for setting upper and lower limit positions of the shutter 3.

Manual setting of the upper and lower limit positions of the shutter 3 by the shutter mechanism described above will now be explained. First, when the DOWN switch 14b is operated, a signal indicative thereof is output to the microcomputer 10. This causes command pulses to be output from the microcomputer 10 to the current driver 20, and the control part 21 thereof outputs a square wave with the same width (time) as the command pulses to the amplifier 22. This square wave in turn causes emitter current to flow from the power supply 13 to the amplifier 22 to thereby supply the drive current to the coils C. Consequently, the output axle of the stepping motor 5 rotates to rotate the drum 2 and thus unwind the shutter 3. At this time, and each time a command pulse is output, the microcomputer 10 decrements the value in a register in the CPU 15.

The STOP switch 14c is operated when the bottom edge part of the shutter 3 has been lowered far enough to contact, for example, the floor. This stops the output of the command pulses from the microcomputer 10, and as a result the stepping motor 5 stops immediately. The RESET switch 14d is then operated to cause the memory 16 to be cleared and, at the same time, to clear the number of command pulses stored in the register of the CPU 15, thereby effectively storing the lower limit position of the shutter 3.

When the UP switch 14a is actuated the shutter 3 is wound onto the drum 2. During this winding operation, the value in the register of the CPU 15 is incremented each time a command pulse is output. When the lower edge of the shutter 1 arrives, for example, in the vicinity of the opening 1a of the housing 1, the STOP switch 14c is actuated to stop the winding of the shutter 3. Next, when the SET switch 14e is operated, the number of command pulses stored in the register is then stored in the memory 16, thereby effectively storing the upper limit position of the shutter 3 in the memory 15.

Automatic setting of the upper and lower limit positions of the shutter 3 by the shutter mechanism described above will now be explained. Initially, the DOWN switch 14b is automatically actuated to unwind the shutter 3 until the lower edge of the shutter 3 contacts the floor surface. This will cause the magnitude of the load on the stepper motor 5 to increase.

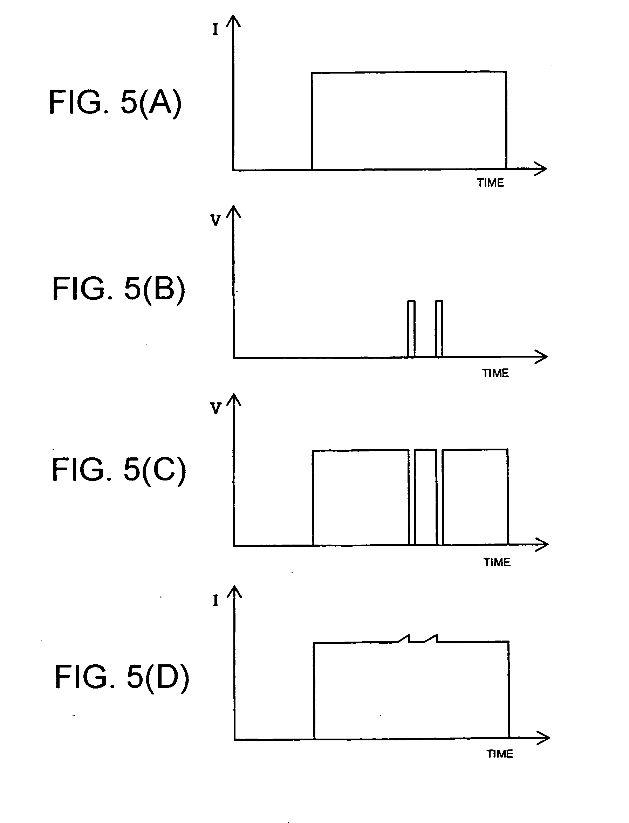

FIG. 5A shows the waveform of the drive current supplied from the power supply 13. When the magnitude of the load on the stepping motor 5 increases, the drive current supplied from the power supply 13 also increases. This causes the voltage across the terminals of the resistor R1 (at points P and Q) to increase. The control part 21 detects the increase and consequently outputs a chopper signal such as the chopper signal shown in FIG. 5B. FIG. 5C shows the waveform of the square wave that is output from the current driver 20 when the chopper signal is output. As is shown in FIG. 5C, the square waves assume a shape that is chopped into a comb-tooth pattern and that has a timing corresponding to that with which the chopper signal is output.

FIG. 5D shows the waveform of the drive current when these comb-tooth pattern square waves are output by the amplifier 22. As is shown, when the magnitude of the load on the stepping motor 5 increases, causing the drive current supplied from the power supply 13 to increase, the control part 21 immediately outputs the chopper signal, causing an immediate drop in the drive current. Because of this, the increase in the drive current due to the increase in the magnitude of the load is immediately compensated for, as shown in FIG. 5D, thereby causing the value of the drive current to remain essentially uniform.

When the value for the elevated drive current decreases, the voltage across the load resistor R2 also decreases. This drop in voltage causes the base voltage for the amplifier 41 in the waveform detector 40 to drop to generate a collector current in the amplifier 41. This collector current assumes a comb-tooth pattern chopper waveform, shown in FIG. 4A, synchronized with the chopper signal.

Here the leftmost graphs under (1) in FIGs. 4A-4C show the state wherein the magnitude of the load on the stepping motor 5 is essentially at the rated value, in which case the quantity of the chopper signals output from the current driver 20 is small. As the magnitude of the load increases, as illustrated from right to left in the graphs in FIG. 4A, the number of chopper signals increases, and the waveform in the rightmost graphs under (4) in FIGs. 4A-4C illustrate the state immediately prior to the stepping motor 5 stalling. Additionally, as the number of the chopper signals increase, the widths of the pulses get larger, as shown in FIG. 4B, and, as shown in FIG. 4C, the voltage increases.

The memory 16 of the microcomputer 10 stores a specific pulse width (time) or a specific voltage as a threshold value, and if the signal input from the load magnitude detection circuit 30 indicates that the threshold value has been exceeded, the microcomputer stops the outputting of the command pulses, thereby stopping the rotation of the stepping motor 5, and stopping the movement of the shutter 3. At this time, the microcomputer 10 also illuminates the LED 11.

In addition, the microcomputer 10 clears the contents of the memory 16 and, at the same time, clears the number of command pulses stored in the register of the CPU 15. Consequently, when the shutter 3 arrives at the lower limit position and the magnitude of the load on the stepping motor 5 increases, the lower limit position of the shutter 3 is stored in the memory 16 because the contents of the register in the CPU 15 and of the memory 16 are cleared.

Next, the UP switch 14a is automatically actuated to wind up the shutter 3. When this is the case, the value in the register of the CPU 16 is incremented each time the microcomputer 10 outputs a command pulse. When the bottom edge of the shutter 3 arrives in, for example, the vicinity of the opening 1a of the housing 1, a guard part 3b equipped at the bottom edge of the shutter 3 fits into the opening 1a of the housing 1, and the load on the stepping motor 5 increases. The microcomputer 10 stops outputting the command pulses in this case as well, in the same way as described above, thereby stopping the winding of the shutter 3. Furthermore, the microcomputer 10 stores into the memory 16 the number of command pulses stored in the register of the CPU 15. Consequently, when the shutter 3 arrives at the upper limit position and the magnitude of the load on the stepping motor 5 increases, the number of command pulses output in order to move the shutter 3 from the lower limit position to the upper limit position is stored in the memory 16 to thereby effectively store the upper limit position of the shutter 3.

It should be noted that the switches 14a-14e on the switchboard 14 can be implemented to enable, for example, manual setup, automatic setup, automatic operation, manual operation, or the like of the shutter mechanism.

After the upper limit position and lower limit position for the shutter 3 have been set, either manually or automatically, as shown above, operations to open and close the shutter are performed automatically. In other words, when the DOWN switch 14b is operated when the shutter 3 is at the upper limit position, the value in the register of the CPU 15 is decremented. The CPU 15 of the microcomputer 10 constantly references the value of the register, and stops outputting command pulses when the value reaches 0. This stops the shutter 3 at the lower limit position. When the UP switch 14a is actuated, the value in the register of the CPU 15 is incremented, and the CPU 15 compares the value of the register to the value stored in the memory 16. The microcomputer 15 stops outputting the command pulses when the value in the register becomes equal to the value in the memory 16, thereby stopping the shutter 3 at the upper limit position. Note that even if the shutter 3 is raised while it is in the process of being lowered, or if the converse occurs, the register switches from decrementing to incrementing (or the converse). Therefore, the shutter 3 will always stop at the upper limit position or the lower limit position.

Next, operation of the above described shutter mechanism in the presence of an obstruction, such as freight, in the path of the shutter 3 will be explained. In such a situation, the memory 16 in the microcomputer 10 has a specific pulse width (time) or a specific voltage stored as a threshold value so that if the signal input from the load magnitude detection circuit 30 indicates that the threshold value has been exceeded, the outputting of the command pulses is stopped to stop the movement of the shutter 3. This makes it possible to prevent in advance damage to the shutter 3 and the obstruction, as well as other components in the shutter mechanism.

Here the threshold value stored in the memory 16 may be different for the automatic setup from what it is for obstruction detection. For example, the threshold value may correspond to a relatively small increase in the magnitude of the load, as indicated by the exemplary pulses shown in FIG. 4A(2), for the automatic setup, while the threshold value can correspond to a relatively large increase in the magnitude of the load, as indicated by the exemplary pulses shown in FIG. 4A(3), during operation. In such a configuration, the load applied on the components of the shutter mechanism when the shutter 3 arrives at the upper limit position or the lower limit position during operation will be minimal. Also, this makes it possible to avoid problems such as the shutter 3 stopping unintentionally during operation due to increased resistance caused by, for example, rust or dirt adhering to guides that support the shutter 3.

Note that it is possible to reduce the load that is applied when the shutter 3 reaches the upper limit position or the lower limit position by stopping the output of the command pulses prior to reaching zero or the set value when the value of the register of the CPU 15 increments from zero to reach the set value, or when the value of the register decrements from the set value to reach zero.

Because the shutter mechanism of the present invention includes a stepping motor 5 the motive source for the drum 2, it is possible to control and stop the rotor of the stepping motor 5 at the same time that the output of command pulses from the microcomputer 5 is stopped. Consequently, it is possible to increase the precision with which the shutter 3 is stopped without the need for extra parts, such as sensors. Furthermore, because a load magnitude detection circuit 30 is provided to detect the magnitude of the load on the stepping motor 5, it is possible to use the detection results thereof to set the upper limit position and lower limit position for the shutter 3, and to use the detection results thereof in, for example, emergency stops.

In other words, because the number of command pulses stored in the memory 16 is reset when the load magnitude detection circuit 30 detects an increase in the magnitude of the load generated by the stepping motor 5, and the number of command pulses output to that point is stored in the memory 16 when the load magnitude detection circuit 12 detects an increase in the magnitude of the load generated by the stepping motor 5 after the outputting of the command pulses is restarted, the lower limit position and upper limit position of the shutter 3 can be set automatically.

The shutter mechanism of the present invention as described above also enables detection results of the load magnitude detection circuit 30 to set the upper limit position and the lower limit position automatically for the object to be selectively wound and unwound, and to use the results of the detection in, for example, emergency stops.

The shutter mechanism and stepping motor control apparatus of the present invention are useful in a wide variety of applications, such as in structures wherein the torque of a stepping motor acts on an object when unwinding the object, such as is the case with shutters. However, the shutter mechanism and stepping motor control apparatus of the present invention may also be applicable when the torque from the stepping motor does not act on objects, such as, for example, drapes, curtains, blinds, or the like. In addition, the shutter mechanism and stepping motor control apparatus of the present invention may also be applicable to structures that are essentially rigid, such as wire, in which case the torque acts on the object. The shutter mechanism and stepping motor control apparatus of the present invention may also be applicable to, for example, sign boards, lighting equipment, partitioning curtains, gondolas ridden by workers, and other winding devices wherein there is hoisting using wires, chains, and the like.

This disclosure is intended to explain how to fashion and use various embodiments in accordance with the invention rather than to limit the true, intended, and fair scope and spirit thereof. The foregoing description is not intended to be exhaustive or to limit the invention to the precise form disclosed. Modifications or variations are possible in light of the above teachings. The embodiment(s) was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims.

## Claims

1. A shutter mechanism, comprising:
a drum (2) including an object (3) wound thereon;
a stepping motor (5) electrically connected to the drum (2) for rotating the drum (2) to selectively wind and unwind the object (3);
a driver (20) electrically connected to the stepping motor (5) for supplying a drive current to the stepping motor (5);
a controller (10) for controlling the driver (20) to enable the driver (20) to supply the drive current to the stepping motor (5), the controller (10) including a memory (16) for storing motor control data for use by the controller (10); and
a load magnitude detection circuit (30) including a waveform detector (40) in electrical communication with the stepping motor (5) for detecting a magnitude of a load at the stepping motor (5), and for outputting a load signal indicative of the magnitude of the load at the stepping motor (5) to the controller (10), based on a waveform output from the waveform detector (40), wherein
the controller (10) is for starting and stopping an output of command pulses to the driver (20) based on the load signal and on the motor control data stored in the memory (16).

2. The shutter mechanism of claim 1, wherein the load magnitude detection circuit (30) is for detecting an increase in the magnitude of the load at the stepping motor (5) when the object (3) reaches an upper limit position or a lower limit position.

3. The shutter mechanism of claim 1, wherein the motor control data stored in the memory (16) comprises a number of command pulses to be output by the controller (10) to move the object (3) between the upper limit position and the lower limit position.

4. The shutter mechanism of claim 3, wherein the controller (10) is for resetting the number of command pulses stored in the memory (16) at the same time as stopping the output of the command pulses when the load magnitude detection circuit (30) detects the increase in the magnitude of the load at the stepping motor (5).

5. The shutter mechanism of claim 4, wherein the controller (10) is further for resuming outputting of the command pulses and for stopping the outputting of the command pulses when the load magnitude detection circuit (30) next detects an increase in the magnitude of the load at the stepping motor (5); and
the memory (16) is further for simultaneously storing a number of command pulses output until the load magnitude detection circuit (30) next detects an increase in the magnitude of the load at the stepping motor (5).

6. The shutter mechanism of claim 5, wherein the memory (16) comprises a non-volatile memory for storing the number of command pulses.

7. The shutter mechanism of claim 6, wherein the controller (10) is for comparing a number of command pulses output to the driver (20) to the number of command pulses stored in and read out from the non-volatile memory to thereby stop the object (3) at the upper limit position or at the lower limit position.

8. The shutter mechanism of claim 7, wherein the load magnitude detection circuit (30) is further for detecting the increase in the magnitude of the load generated at the stepping motor (5) when the object (3) is moved between the upper limit position and the lower limit position when the object (3) is stopped, or a direction of movement thereof is reversed.

9. The shutter mechanism of claim 8, wherein the increase in the magnitude of the load when either the object (3) is stopped or when the direction of movement thereof is reversed is greater than the increase in the magnitude of the load when the number of command pulses stored in the memory (16) is reset or when the number of command pulses is stored in the memory (16).

10. The shutter mechanism of claim 1, wherein the driver (20) is a chopper -type current source driver that generates chopper signals to chop out square waves output by the driver (20) when the magnitude of the load at the stepping motor (5) increases to cause a value of the drive current to remain uniform.

11. The shutter mechanism of claim 10, wherein the waveform detector (40) detects the chopper signals output by the driver (20), and the waveform output by the waveform detector (40) is synchronized with the detected chopper signals, and wherein the load magnitude detection circuit (30) is for detecting the magnitude of the load at the stepping motor (5) based on the waveform output from the waveform detector (40).

12. The shutter mechanism of claim 1, wherein the load magnitude detection circuit (30) includes a filter (51, R4, R5) for converting the waveform output from the waveform detector (40) into a series of pulses, and wherein the load magnitude detection circuit (30) is for detecting the magnitude of the load at the stepping motor (5) based on widths of the pulses output by the filter.

13. The shutter mechanism of claim 1, wherein the load magnitude detection circuit includes a filter (51, R4, R5) that converts the waveform output from the waveform detector (40) into voltage signals, and wherein the load magnitude detection circuit (30) detects the magnitude of the load at the stepping motor (5) based on the voltage signals output by the filter.

14. A stepping motor control apparatus for controlling upper and lower limit stopping positions of a stepping motor (5), comprising:
a microcomputer (10) including a memory (16) for storing upper and lower limit motor stopping position data;
a load magnitude detection circuit (30), including a waveform detector (40) in electrical communication with the stepping motor (5), for detecting an increase in a load at the stepping motor (5), the load magnitude detection circuit (30) for generating and inputting a signal indicative of the increase in the load at the stepping motor (5) and based on a waveform output by the waveform detector (40) into the microcomputer (10); and
a current driver (20) for causing a drive current to be supplied to the stepping motor (5), wherein
the microcomputer (10) is further for controlling the current driver (20) to enable the current driver (20) to selectively start and stop supplying of the drive current to the stepping motor (5) based on the stored upper and lower limit motor stopping position data in response to receiving the signal indicative of the increase in the load at the stepping motor (5) from the load magnitude detection circuit (30).

15. The stepping motor control apparatus of claim 14, wherein the upper and lower limit motor stopping position data stored in the memory (16) comprises a number of command pulses to be output by the microcomputer (10) to the current driver (20).

16. The stepping motor control apparatus of claim 15, wherein the microcomputer (10) is for comparing a number of command pulses output thereby to the current driver (20) to the number of command pulses stored in and read out from the memory (16) for purposes of determining whether the upper or lower limit motor stopping position has been reached.

17. The stepping motor control apparatus of claim 14, wherein the load magnitude detection circuit (30) is further for detecting the increase in the load at the stepping motor (5) when an object (3) being moved by the stepping motor (5) is stopped, or a direction of movement thereof is reversed.

18. The stepping motor control apparatus of claim 14, wherein the current driver (20) is a chopper-type current source driver that generates chopper signals to chop out square waves output by the current driver (20) when the magnitude of load at the stepping motor (5) increases to cause a value of the drive current to remain uniform.

19. The stepping motor control apparatus of claim 18, wherein the waveform detector (40) detects the chopper signals, and the waveform output by the waveform detector (40) is synchronized with the detected chopper signals.

20. A stepping motor control apparatus for controlling bi-directional first and second stopping positions of an object moved by a stepping motor, comprising:
a microcomputer (10) including a memory (16) for storing first and second stopping position data;
a load magnitude detection circuit (30), including a waveform detector (40) in electrical communication with the stepping motor (5), for detecting an increase in a load at the stepping motor (5), the load magnitude detection circuit (30) for inputting a signal indicative of the increase in the load at the stepping motor (5) and based on a waveform output by the waveform detector (40) to the microcomputer (10) ;
a current driver (20) for causing a drive current to be supplied to the stepping motor (5), wherein
the microcomputer (10) is further for controlling the current driver (20) to selectively start and stop supplying of the drive current to the stepping motor (5) based on the stored first and second stopping position data and on the signal indicative of the increase in the load at the stepping motor (5) from the load magnitude detection circuit (30).

## Patentansprüche

1. Rollladenmechanismus, umfassend:
eine Walze (2) mit einem darauf gewickelten Gegenstand (3);
einen Schrittmotor (5), der mit der Walze (2) elektrisch verbunden ist, um die Walze (2) so zu drehen, dass der Gegenstand (3) wahlweise auf- und abgewickelt wird;
einen Treiber (20), der mit dem Schrittmotor (5) elektrisch verbunden ist, um den Schrittmotor (5) mit Antriebstrom zu versorgen;
eine Steuerung (10), die den Treiber (20) so steuert, dass er den Schrittmotor (5) mit Antriebstrom versorgt, wobei die Steuerung (10) einen Speicher (16) zum Speichern von Motorsteuerungsdaten umfasst, die durch die Steuerung verwendet werden; und
eine Lastgrößenerkennungsschaltung (30) mit einem Wellenformdetektor (40), der elektrisch mit dem Schrittmotor (5) verbunden ist, zur Erkennung der Größe einer Last am Schrittmotor (5) und zur Ausgabe an die Steuerung (10) eines Lastsignals, das die Größe der Last am Schrittmotor (5) angibt, basierend auf einer Wellenform-Ausgabe durch den Wellenformdetektor (40), wobei
die Steuerung (10) zum Starten und Anhalten einer Ausgabe von Steuerimpulsen an die Steuerung (20) basierend auf dem Lastsignal sowie auf den im Speicher (16) gespeicherten Motorsteuerungsdaten dient.

2. Rollladenmechanismus nach Anspruch 1, wobei die Lastgrößenerkennungsschaltung (30) zur Erkennung einer Zunahme der Lastgröße am Schrittmotor (5) dient, wenn der Gegenstand (3) eine obere Endposition oder eine untere Endposition erreicht.

3. Rollladenmechanismus nach Anspruch 1, wobei die in dem Speicher (16) gespeicherten Motorsteuerungsdaten eine Anzahl von Steuerimpulsen umfassen, die durch die Steuerung (10) zur Bewegung des Gegenstands (3) zwischen der oberen Endposition und der unteren Endposition ausgegeben werden.

4. Rollladenmechanismus nach Anspruch 3, wobei die Steuerung (10) zur Rücksetzung der Anzahl der im dem Speicher (16) gespeicherten Steuerimpulse sowie gleichzeitig zum Anhalten der Ausgabe von Steuerimpulsen dient, wenn die Lastgrößenerkennungsschaltung (30) die Zunahme der Lastgröße am Schrittmotor (5) erkennt.

5. Rollladenmechanismus nach Anspruch 4, wobei die Steuerung (10) ferner zur Wiederaufnahme der Ausgabe von Steuerimpulsen und zum Anhalten der Ausgabe von Steuerimpulsen, wenn die Lastgrößenerkennungsschaltung (30) die nächste Zunahme der Lastgröße am Schrittmotor (5) erkennt, dient; und
der Speicher (16) ferner zum gleichzeitigen Speichern einer Anzahl von Steuerimpulsen dient, die ausgegeben wurden, bis die Lastgrößenerkennungsschaltung (30) die nächste Zunahme der Lastgröße am Schrittmotor (5) erkennt.

6. Rollladenmechanismus nach Anspruch 5, wobei der Speicher (16) einen nicht flüchtigen Speicher zum Speichern von Steuerimpulsen umfasst.

7. Rollladenmechanismus nach Anspruch 6, wobei die Steuerung (10) zum Vergleichen einer Anzahl von an den Treiber (20) ausgegeben Steuerimpulsen mit der Anzahl von Steuerimpulsen dient, die gespeichert sind und aus dem nicht flüchtigen Speicher gelesen werden, um dadurch den Gegenstand (3) an der oberen Endposition oder an der unteren Endposition anzuhalten.

8. Rollladenmechanismus nach Anspruch 7, wobei die Lastgrößenerkennungsschaltung (30) ferner zur Erkennung der Zunahme der am Schrittmotor (5) erzeugten Lastgröße dient, wenn der Gegenstand (3) zwischen der oberen Endposition und der unteren Endposition bewegt wird, wenn der Gegenstand (3) angehalten wird, oder dessen Bewegungsrichtung umgekehrt wird.

9. Rollladenmechanismus nach Anspruch 8, wobei die Zunahme der Lastgröße, wenn der Gegenstand (3) entweder angehalten wird oder dessen Bewegungsrichtung umgekehrt wird, größer als die Zunahme der Lastgröße ist, wenn die Anzahl der im dem Speicher (16) gespeicherten Steuerimpulse rückgesetzt wird oder wenn die Anzahl von Steuerimpulsen im dem Speicher (16) gespeichert wird.

10. Rollladenmechanismus nach Anspruch 1, wobei der Treiber (20) eine Stromquelle des Chopper-Typs ist, die Unterbrechungssignale zur Unterbrechung von durch den Treiber (20) ausgegebenen Rechteckwellen bei einer Zunahme der Lastgröße am Schrittmotor (5) erzeugt, um zu bewirken, dass ein Wert des Antriebstroms gleichmäßig bleibt.

11. Rollladenmechanismus nach Anspruch 10, wobei der Wellenformdetektor (40) die durch den Treiber (20) ausgegebenen Unterbrechungssignale erkennt, und die Wellenform-Ausgabe von dem Wellenformdetektor (40) mit den erkannten Unterbrechungssignalen synchronisiert wird, und wobei die Lastgrößenerkennungsschaltung (30) zur Erkennung der Lastgröße am Schrittmotor (5) basierend auf der Wellenform-Ausgabe durch den Wellenformdetektor (40) dient.

12. Rollladenmechanismus nach Anspruch 1, wobei die Lastgrößenerkennungsschaltung (30) einen Filter (51, R4, R5) umfasst, um die Wellenform-Ausgabe von dem Wellenformdetektor (40) in eine Reihe von Impulsen umzuwandeln, und wobei die Lastgrößenerkennungsschaltung (30) zur Erkennung der Lastgröße am Schrittmotor (5) basierend auf der Pulsweite der durch den Filter ausgegebenen Impulse dient.

13. Rollladenmechanismus nach Anspruch 1, wobei die Lastgrößenerkennungsschaltung einen Filter (51, R4, R5) umfasst, der die Wellenform-Ausgabe von dem Wellenformdetektor (40) in Spannungssignale umwandelt, und wobei die Lastgrößenerkennungsschaltung (30) zur Erkennung der Lastgröße am Schrittmotor (5) basierend auf den durch den Filter ausgegebenen Spannungssignalen dient.

14. Schrittmotor-Steuervorrichtung zur Steuerung der oberen und unteren Endhaltepositionen eines Schrittmotors (5), umfassend:
einen Mikrocomputer (10) mit einem Speicher (16) zum Speichern von Motorpositionsdaten zur oberen und unteren Endhalteposition;
eine Lastgrößenerkennungsschaltung (30) mit einem Wellenformdetektor (40), der elektrisch mit dem Schrittmotor (5) verbunden ist, zur Erkennung einer Zunahme der Last am Schrittmotor (5), wobei die Lastgrößenerkennungsschaltung (30) zur Erzeugung und Eingabe eines Signals dient, das die Zunahme der Last am Schrittmotor (5) basierend auf einer durch den Welleformdetektor (40) an den Mikrocomputer (10) ausgegebenen Wellenform dient; und
einen Stromtreiber (20) zur Versorgung des Schrittmotors (5) mit Antriebstrom, wobei
der Mikrocomputer (10) ferner zur Steuerung des Stromtreibers (20) dient, um zu bewirken, dass der Stromtreiber (20) die Versorgung des Schrittmotors (5) mit Antriebstrom wahlweise startet und anhält basierend auf den gespeicherten Motorpositionsdaten zur oberen und unteren Endhalteposition nach Empfang des Signals, das die Zunahme der Last am Schrittmotor (5) von der Lastgrößenerkennungsschaltung (30) angibt.

15. Schrittmotor-Steuervorrichtung nach Anspruch 14, wobei die in dem Speicher (16) gespeicherten Motorpositionsdaten zur oberen und unteren Endhalteposition eine Anzahl von Steuerimpulsen umfassen, die durch den Mikrocomputer (10) an den Stromtreiber (20) ausgegeben werden.

16. Schrittmotor-Steuervorrichtung nach Anspruch 15, wobei der Mikrocomputer (10) zum Vergleichen einer Anzahl von Steuerimpulsen dient, die durch den Mikrocomputer an den Stromtreiber (20) ausgegeben werden, mit der Anzahl von Steuerimpulsen, die in dem Speicher (16) gespeichert und aus dem Speicher (16) gelesen werden, um zu bestimmen, ob die obere oder untere Motor-Endhalteposition erreicht wurde.

17. Schrittmotor-Steuervorrichtung nach Anspruch 14, wobei die Lastgrößenerkennungsschaltung (30) ferner zur Erkennung der Zunahme der Last an dem Schrittmotor (5) dient, wenn ein durch den Schrittmotor (5) bewegter Gegenstand (3) angehalten wird oder dessen Bewegungsrichtung umgekehrt wird.

18. Schrittmotor-Steuervorrichtung nach Anspruch 14, wobei der Stromtreiber (20) eine Stromquelle des Chopper-Typs ist, die Unterbrechungssignale zur Unterbrechung von durch den Stromtreiber (20) ausgegebenen Rechteckwellen bei einer Zunahme der Lastgröße am Schrittmotor (5) erzeugt, um zu bewirken, dass ein Wert des Antriebstroms gleichmäßig bleibt.

19. Schrittmotor-Steuervorrichtung nach Anspruch 18, wobei der Welleformdetektor (40) die Unterbrechungssignale erkennt und die durch den Welleformdetektor (40) ausgegebene Wellenform mit den erkannten Unterbrechungssignalen synchronisiert wird.

20. Schrittmotor-Steuervorrichtung zur Steuerung von bidirektionalen ersten und zweiten Haltepositionen eines durch einen Schrittmotor bewegten Gegenstands, umfassend:
einen Mikrocomputer (10) mit einem Speicher (16) zur Speicherung von Daten zur ersten und zweiten Halteposition;
eine Lastgrößenerkennungsschaltung (30) mit einem Wellenformdetektor (40), der elektrisch mit dem Schrittmotor (5) verbunden ist, zur Erkennung einer Zunahme der Last am Schrittmotor (5), wobei die Lastgrößenerkennungsschaltung (30) zur Eingabe eines Signals dient, das die Zunahme der Last am Schrittmotor (5) basierend auf einer durch den Welleformdetektor (40) an den Mikrocomputer (10) ausgegebenen Wellenform angibt; und
einen Stromtreiber (20) zur Versorgung des Schrittmotors (5) mit Antriebstrom, wobei
der Mikrocomputer (10) ferner zur Steuerung des Stromtreibers (20) dient, um zu bewirken, dass der Stromtreiber (20) die Versorgung des Schrittmotors (5) mit Antriebstrom wahlweise startet und anhält basierend auf den gespeicherten Daten zur ersten und zweiten Halteposition und auf dem Signal, das die Zunahme der Last am Schrittmotor (5) aus der Lastgrößenerkennungsschaltung (30) angibt.

## Revendications

1. Mécanisme de volet, comprenant :
un tambour (2) incluant un objet (3) enroulé dessus ;
un moteur pas à pas (5) connecté électriquement au tambour (2) pour faire tourner le tambour (2) afin d'enrouler et de dérouler sélectivement l'objet (3) ;
un excitateur (20) connecté électriquement au moteur pas à pas (5) pour fournir un courant d'entraînement au moteur pas à pas (5) ;
un contrôleur (10) pour contrôler l'excitateur (20) afin de permettre à l'excitateur (20) de fournir le courant d'entraînement au moteur pas à pas (5), ledit contrôleur (10) incluant une mémoire (16) pour stocker des données de contrôle du moteur destiné à être utilisées par le contrôleur (10) ; et
un circuit de détection de valeur de charge (30) incluant un détecteur de forme d'onde (40) connecté électriquement au moteur pas à pas (5) pour détecter la valeur d'une charge au moteur pas à pas (5), et pour sortir au contrôleur (10) un signal de charge indicateur de la valeur de la charge au moteur pas à pas (5), sur la base d'une forme d'onde sortie du détecteur de forme d'onde (40), où
le contrôleur (10) est destiné à démarrer et à arrêter une sortie d'impulsions de commande à l'excitateur (20) sur la base du signal de charge et des données de contrôle du moteur stockées dans la mémoire (16).

2. Mécanisme de volet selon la revendication 1, où le circuit de détection de valeur de charge (30) est destiné à détecter une augmentation dans la valeur de la charge au moteur pas à pas (5) quand l'objet (3) atteint une position de limite supérieure ou une position de limite inférieure.

3. Mécanisme de volet selon la revendication 1, où les données de contrôle du moteur stockées dans la mémoire (16) comprennent un nombre d'impulsions de commande devant être sorti par le contrôleur (10) pour déplacer l'objet (3) entre la position de limite supérieure et la position de limite inférieure.

4. Mécanisme de volet selon la revendication 3, où le contrôleur (10) est destiné à remettre à l'état initial le nombre d'impulsions de commande stocké dans la mémoire (16) et en même temps à arrêter la sortie des impulsions de commande quand le circuit de détection de valeur de charge (30) détecte une augmentation dans la valeur de la charge au moteur pas à pas (5).

5. Mécanisme de volet selon la revendication 4, où le contrôleur (10) est de plus destiné à reprendre la sortie des impulsions de commande et à arrêter la sortie des impulsions de commande quand le circuit de détection de valeur de charge (30) détecte la prochaine augmentation dans la valeur de la charge au moteur pas à pas (5) ; et la mémoire (16) est de plus destinée à stocker simultanément un nombre d'impulsions de commande sorti jusqu'à ce que le circuit de détection de valeur de charge (30) détecte la prochaine augmentation dans la valeur de la charge au moteur pas à pas (5).

6. Mécanisme de volet selon la revendication 5, où la mémoire (16) comprend une mémoire non volatile pour stocker le nombre d'impulsions de commande.

7. Mécanisme de volet selon la revendication 6, où le contrôleur (10) est destiné à comparer un nombre d'impulsions de commande sorti à l'excitateur (20) avec le nombre d'impulsions de commande stocké dans et lu à partir de la mémoire non volatile afin d'arrêter ainsi l'objet (3) à la position de limite supérieure ou à la position de limite inférieure.

8. Mécanisme de volet selon la revendication 7, où le circuit de détection de valeur de charge (30) est de plus destiné à détecter l'augmentation dans la valeur de la charge générée au moteur pas à pas (5) quand l'objet (3) est déplacé entre la position de limite supérieure et la position de limite inférieure quand l'objet (3) est arrêté ou qu'une direction du mouvement en est renversée.

9. Mécanisme de volet selon la revendication 8, où l'augmentation dans la valeur de la charge, quand l'objet (3) est arrêté ou quand la direction du mouvement en est renversée, est supérieure à l'augmentation de la valeur de la charge quand le nombre d'impulsions de commande stocké dans la mémoire (16) est remis à l'état initial ou quand le nombre d'impulsions de commande est stocké dans la mémoire (16).

10. Mécanisme de volet selon la revendication 1, où l'excitateur (20) est une source de courant de type hacheur qui génère des signaux d'interruption pour interrompre les ondes carrées sorties par l'excitateur (20) quand la valeur de la charge au moteur pas à pas (5) augmente afin qu'une valeur du courant d'entraînement reste uniforme.

11. Mécanisme de volet selon la revendication 10, où le détecteur de forme d'onde (40) détecte les signaux d'interruption sortis par l'excitateur (20), et la forme d'onde sortie par le détecteur de forme d'onde (40) est synchronisée avec les signaux d'interruption détectés, et où le circuit de détection de valeur de charge (30) est destiné à détecter la valeur de la charge au moteur pas à pas (5) sur la base de la forme d'onde sortie par le détecteur de forme d'onde (40).

12. Mécanisme de volet selon la revendication 1, où le circuit de détection de valeur de charge (30) inclut un filtre (51, R4, R5) pour convertir la forme d'onde sortie par le détecteur de forme d'onde (40) en une série d'impulsions, et où le circuit de détection de valeur de charge (30) est destiné à détecter la valeur de la charge au moteur pas à pas (5) sur la base des largeurs des impulsions sorties par le filtre.

13. Mécanisme de volet selon la revendication 1, où le circuit de détection de valeur de charge inclut un filtre (51, R4, R5) qui convertit la forme d'onde sortie par le détecteur de forme d'onde (40) en signaux de voltage, et où le circuit de détection de valeur de charge (30) détecte la valeur de la charge au moteur pas à pas (5) sur la base des signaux de voltage sortis par le filtre.

14. Appareil de contrôle de moteur pas à pas pour contrôler les positions de limites supérieures et inférieures d'un moteur pas à pas (5), comprenant :
un micro-ordinateur (10) incluant une mémoire (16) pour stocker les données de position d'arrêt du moteur à des limites supérieures et inférieures ;
un circuit de détection de valeur de charge (30), incluant un détecteur de forme d'onde (40) connecté électriquement au moteur pas à pas (5) pour détecter une augmentation dans une charge au moteur pas à pas (5), le circuit de détection de valeur de charge (30) étant destiné à générer et entrer un signal indicateur de l'augmentation dans la charge au moteur pas à pas (5) et basé sur une forme d'onde sortie par le détecteur de forme d'onde (40) au micro-ordinateur (10) ; et
un excitateur de courant (20) pour faire en sorte qu'un courant d'entraînement soit fourni au moteur pas à pas (5), où
le micro-ordinateur (10) est de plus destiné à contrôler l'excitateur de courant (20) pour permettre à l'excitateur de courant (20) de démarrer et d'arrêter sélectivement la fourniture du courant d'entraînement au moteur pas à pas (5) sur la base des données de position d'arrêt du moteur aux limites supérieures et inférieures stockées, en réponse à la réception du signal indicateur de l'augmentation dans la charge au moteur pas à pas (5) venant du circuit de détection de valeur de charge (30).

15. Appareil de contrôle de moteur pas à pas selon la revendication 14, où les données de position d'arrêt du moteur à des limites supérieures et inférieures stockées dans la mémoire (16) comprennent un nombre d'impulsions de commande devant être sorti par le micro-ordinateur (10) à l'excitateur de courant (20).

16. Appareil de contrôle de moteur pas à pas selon la revendication 15, où le micro-ordinateur (10) est destiné à comparer un nombre d'impulsions de commande ainsi sorti à l'excitateur de courant (20) avec le nombre d'impulsions de commande stocké dans et lu à partir de la mémoire (16) dans le but de déterminer si la limite supérieure ou la limite inférieure de la position d'arrêt du moteur a été atteinte.

17. Appareil de contrôle de moteur pas à pas selon la revendication 14, où le circuit de détection de valeur de charge (30) est de plus destiné à détecter une augmentation dans la charge au moteur pas à pas (5) quand un objet (3) étant déplacé par le moteur pas à pas (5) est arrêté, ou qu'une direction de mouvement en est renversée.

18. Appareil de contrôle de moteur pas à pas selon la revendication 14, où l'excitateur de courant (20) est un excitateur de source de courant de type hacheur qui génère des signaux d'interruption pour interrompre des ondes carrées sorties par l'excitateur de courant (20) quand la valeur de la charge au moteur pas à pas (5) augmente afin qu'une valeur du courant d'entraînement reste uniforme.

19. Appareil de contrôle de moteur pas à pas selon la revendication 18, où le détecteur de forme d'onde (40) détecte les signaux d'interruption, et où la forme d'onde sortie par le détecteur de forme d'onde (40) est synchronisée avec les signaux d'interruption détectés.

20. Appareil de contrôle de moteur pas à pas pour contrôler les premières et secondes directions d'arrêt bidirectionnelles d'un objet déplacé par un moteur pas à pas, comprenant :
un micro-ordinateur (19) incluant une mémoire (16) pour stocker les données de première et seconde positions d'arrêt ;
un circuit de détection de valeur de charge (30), incluant un détecteur de forme d'onde (40) connecté électriquement au moteur pas à pas (5) pour détecter une augmentation dans une charge au moteur pas à pas (5), le circuit de détection de valeur de charge (30) étant destiné à entrer un signal indicateur de l'augmentation dans la charge au moteur pas à pas (5) et basé sur une forme d'onde sortie par le détecteur de forme d'onde (40) au micro-ordinateur (10);
un excitateur de courant (20) pour faire en sorte qu'un courant d'entraînement soit fourni au moteur pas à pas (5), où
le micro-ordinateur (10) est de plus destiné à contrôler l'excitateur de courant (20) pour démarrer et arrêter sélectivement la fourniture du courant d'entraînement au moteur pas à pas (5) sur la base des données de première et seconde positions d'arrêt stockées et sur la base du signal indicateur de l'augmentation dans la charge au moteur pas à pas (5) venant du circuit de détection de valeur de la charge (30).
